# EUROPÄISCHE PATENTSCHRIFT

(11) **EP 0 968 382 B1**
(45) Veröffentlichungstag und Bekanntmachung des Hinweises auf die Patenterteilung: **21.05.2003**
(21) Anmeldenummer: 97929278.6
(22) Anmeldetag: 24.06.1997
(51) Int. Cl.: F16K 1/44

(54) **SITZREINIGUNGSFÄHIGES DOPPELSITZVENTIL**
DOUBLE SEAT VALVE WITH CLEANABLE SEATS
SOUPAPE A DOUBLE SIEGE NETTOYABLE

(30) Priorität: 18.03.1997 DE 19711077
(43) Veröffentlichungstag der Anmeldung: 05.01.2000
(73) Patentinhaber: TUCHENHAGEN GmbH, 21514 Büchen (DE)
(72) Erfinder: BURMESTER, Jens, D-23883 Grambek (DE)
(74) Vertreter: Glaeser, Joachim, Dipl.-Ing.
(86) Internationale Anmeldenummer: EP9703306
(87) Internationale Veröffentlichungsnummer: WO98041786

(56) Entgegenhaltungen:
- EP-A- 0 174 384
- EP-A- 0 545 846
- EP-A- 0 646 741
- DE-A- 3 801 561
- DE-A- 3 835 944
- NL-A- 7 811 382

## Beschreibung

Die Erfindung betrifft ein sitzreinigungsfähiges Doppelsitzventil mit zwei seriell angeordneten, relativ zueinander bewegbaren Schließgliedern nach dem Oberbegriff des Anspruchs 1.

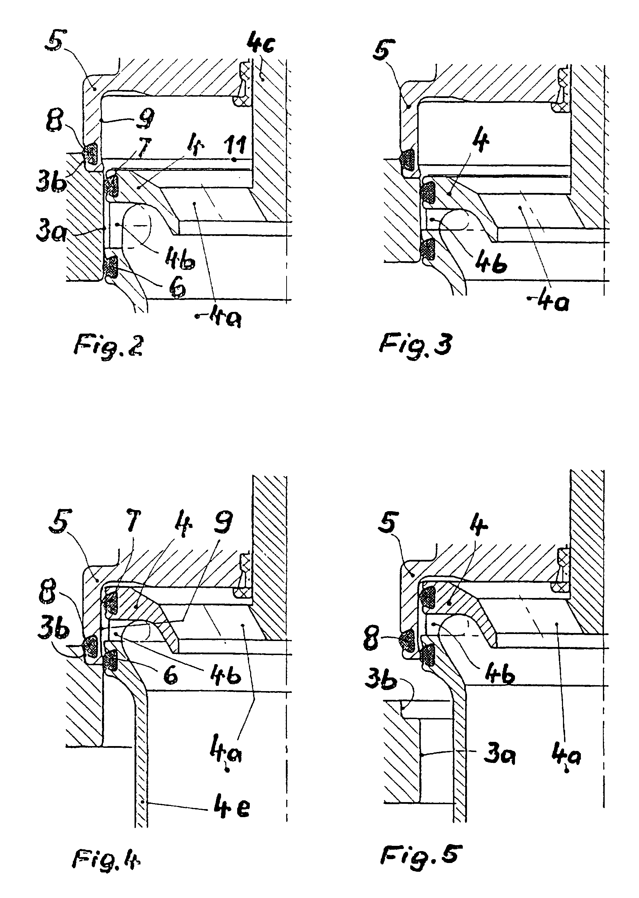

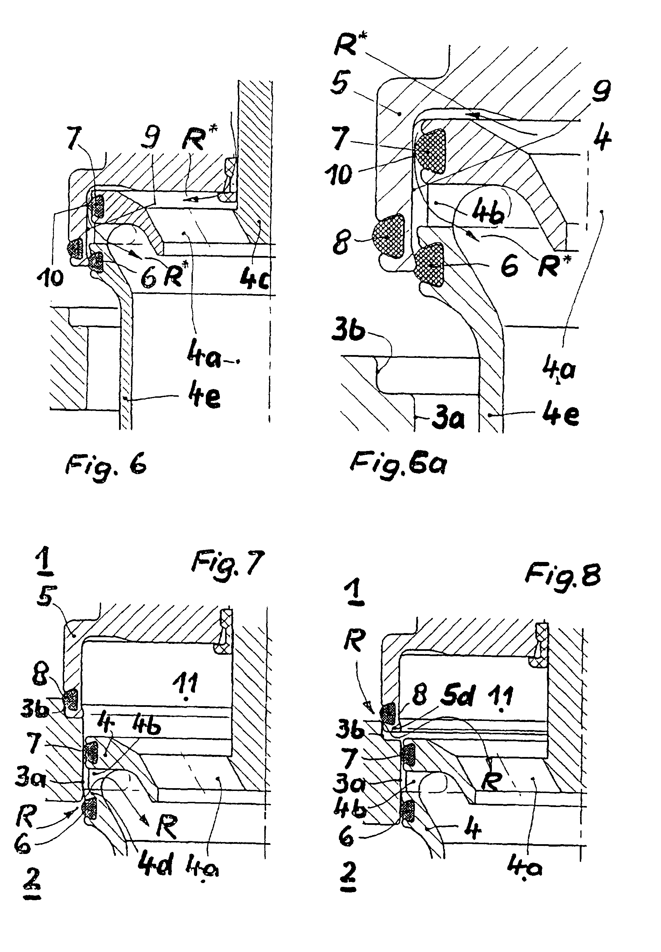

Ein Doppelsitzventil der gattungsgemäßen Art ist beispielsweise aus der **EP-A-0 174 384** bekannt. Dieses Ventil hat den Nachteil, daß die zur Reinigung der Sitzfläche des schieberartig ausgebildeten Schließgliedes, des Schieberkolbens, im anderen Schließglied (vgl. **Figuren 3a-3d**) oder in der zylindrischen Ventilsitzfläche (vgl. **Figuren 4a-4d**) vorgesehene Umfangsnut, in die das Dichtungsmittel des Schieberkolbens in einer Zwischenstellung zur Durchführung der Sitzreinigung verbracht werden muß, auch bei jeder regulären Öffnungs- oder Schließbewegung des Doppelsitzventils passiert werden muß. Hierdurch entsteht bei jeder dieser Bewegungen ein Flüssigkeitsdurchtritt im Sitzbereich, der zwar im Falle der Sitzreinigung, nicht aber bei der normalen Schaltbewegung des Doppelsitzventils erwünscht ist.

Aus der **DE 38 35 944 A1** ist ein anderes sitzreinigungsfähiges Doppelsitzventil bekannt, bei dem sich im Unterschied zum Doppelsitzventil der gattungsgemäßen Art der Schieberkolben im Zuge seiner Öffnungsbewegung lediglich am anderen Schließglied dichtend anlegt, bevor dieses durch den Schieberkolben gleichfalls in die Offenstellung überführt wird. Zum Zwecke der Sitzreinigung der Sitzfläche des Schieberkolbens wird dieser um einen Teilhub entgegen seiner Öffnungsbewegung spaltweit in eine Sitzreinigungsstellung überführt. Bei diesem Doppelsitzventil bleibt zwar die reguläre Öffnungs- oder Schließbewegung durch die getroffenen Maßnahmen zur Realisierung der Sitzreinigung unberührt, jedoch ist die zur Reinigung der Ventilsitze durch spaltweite Ansteuerung der Schließglieder jeweils aus dem zugeordneten Ventilgehäuseteil gewonnene Reinigungsmittelmenge nur schwer auf das absolut notwendige Minimum, das zur Beseitigung der Verunreinigungen im Sitzbereich hinreichend ist, zu bemessen und zu begrenzen. Um dennoch einen ökonomischen und umweltschonenden Einsatz von Reinigungsmitteln sicherzustellen, wird in der DE 38 35 944 A1 vorgeschlagen, die Ventilteller taktweise anzusteuern.

Bei einem anderen bekannten sitzreinigungsfähigen Doppelsitzventil (**EP-A- 0 646 741**) wird die zur Reinigung der Ventilsitze bereitzustellende Reinigungsmittelmenge dadurch begrenzt, daß in der jeweiligen Spülstellung der in Frage kommende Schieberventilkörper an einem mit Spülmitteldurchtritten versehenen Gehäuseanschlag anliegt. Demzufolge gibt es bei diesem bekannten Doppelsitzventil Bereiche, die während des Spülvorganges nicht mit Reinigungsmittel benetzt werden können, es sei denn, auch dieses Ventil würde, allerdings wegen des vorstehend erwähnten Nachteils, taktweise angesteuert.

Bei den vorgenannten bekannten Doppelsitzventilen kann der über die freigelegte Sitzfläche aus dem benachbarten Ventilgehäuseteil herangeführte Reinigungsmittelstrom mit mehr oder weniger großer kinetischer Energie auf den in seiner Schließstellung befindlichen anderen Ventilsitzbereich auftreffen. Dies kann unter Umständen dazu führen, daß Reinigungsmittel durch den geschlossenen Dichtungsbereich hindurchdringt. Eine besondere Gefahr ist dann gegeben, wenn die jeweilige Dichtung einer hohen Abnutzung unterlag und der Verschleiß dazu führt, daß die verminderte Dichtungsvorspannung eine hinreichende Dichtwirkung unter der Einwirkung der kinetischen Energie des Spritzstrahles nicht mehr sicherstellen kann.

Weiterhin wird an sitzreinigungsfähige Doppelsitzventile die Anforderung gestellt, daß das bei der Sitzreinigung in den Leckagehohlraum einströmende Reinigungsmittel drucklos, das heißt ohne Druckaufbau im Leckagehohlraum, in die Umgebung des Doppelsitzventils abgeführt wird. Die eingangs erwähnten Doppelsitzventile (DE 38 35 944 A1 und EP-A-0 174 384) dürften diesbezüglich die gestellten Anforderungen nur schwerlich erfüllen können, da einerseits die Möglichkeit einer knappen Bemessung der jeweiligen Reinigungsmittelmenge nicht erkennbar ist und andererseits die Abführquerschnitte dem erhöhten Reinigungsmittelangebot nicht in entsprechender Weise anpaßbar sind.

In den Vereinigten Staaten von Amerika wird für die in Anlagen der Molkereiindustrie eingesetzten Doppelsitzventile sogar gefordert, daß bei groben Defekten der Dichtungen oder gar bei deren Verlust kein Reinigungsmittel über den ungedichteten Ventilsitz in das benachbarte Ventilgehäuseteil gelangen darf. Selbst wenn es gelingt, die bei der Sitzreinigung anfallende Reinigungsmittelmenge sehr klein zu bemessen, wie dies offensichtlich beim bekannten Doppelsitzventil gemäß EP-A-0 646 741 der Fall ist, würde dort das direkte Anspritzen eines der beiden Sitzbereiche im Falle eines groben Dichtungsdefektes oder eines -verlustes zu einem Durchtritt von Reinigungsflüssigkeit in das benachbarte Ventilgehäuseteil führen. Dieser Sachverhalt wäre zumindest bei der Spülung des oberen Sitzbereichs am unteren Ventilsitz gegeben (vgl. **Figur 2c** der EP-A-0 646 741), wenn hier ein grober Dichtungsdefekt oder gar -verlust vorläge. Aus diesem Grunde wird bislang, zumindest in der Molkereiindustrie, der Einsatz der vorstehend genannten sitzreinigungsfähigen Doppelsitzventile abgelehnt.

Die absolut drucklose Abführung von Flüssigkeitsmengen aus dem Leckagehohlraum, seien es Leckagen aufgrund von Dichtungsdefekten oder Reinigungsmittelmengen aus einer wie auch immer gearteten Reinigung des Leckagehohlraumes oder einer wünschenswerten, weil notwendigen Sitzreinigung, sind eine Forderung, die in jüngster Zeit, insbesondere auf dem US-amerikanischen Markt bzw. im US-amerikanischen Einflußbereich beim Einsatz von Doppelsitzventilen und hier insbesondere in der Molkereitechnik, zunehmend an Bedeutung gewinnt. Es handelt sich hierbei um die Erfüllung der Forderung des sogenannten US-amerikanischen "3A-Standards" und der sogenannten "FDA-Regularien", die besagen, daß der Leckageraum mit einem der Nennweite des größten an das Ventil angeschlossenen Rohres entsprechenden Querschnitt drainierbar mit der Atmosphäre verbunden sein soll.

Einerseits gewinnen sitzreinigungsfähige Doppelsitzventile an Bedeutung, weil hierdurch Sitzbereiche auch dann gereinigt werden können, wenn lediglich in einem der Ventilgehäuseteile Reinigungsmittel ansteht und das andere ggf. noch produktbeaufschlagt ist, d.h. wenn das Ventil zum Zwecke der Reinigung seiner Sitzflächen nicht vollständig geöffnet werden kann, andererseits wird im Zuge der Sitzreinigung die Sicherheitsphilosophie des Doppelsitzventils, daß nämlich unter Druck im Ventil anstehendes Reinigungsmittel und Produkt nicht durch nur eine Dichtung voneinander getrennt werden dürfen, stets außer Kraft gesetzt. In gleicher Weise wird übrigens die Sicherheitsphilosophie des Doppelsitzventils immer dann unterlaufen, wenn der Leckagehohlraum in der Schließ- oder in der Offenstellung des Doppelsitzventils durch externe Zufuhr des Reinigungsmittels aus der Umgebung des Doppelsitzventils gereinigt wird. Man hält sich bislang außerhalb des US-amerikanischen Einflußbereichs im Falle der Reinigung des Leckagehohlraumes bei offenem oder geschlossenem Ventil und bei der Sitzreinigung nur deshalb nicht konsequent und stringent an die Forderungen, die aus der Doppelsitzventil-Sicherheitsphilosophie resultieren, weil man davon ausgeht, daß bei ausreichender Bemessung des Verbindungsweges zwischen dem Leckagehohlraum und Umgebung des Doppelsitzventils das Reinigungsmittel nicht unter Druck am geschlossenen Ventilsitz ansteht und weil darüber hinaus bislang eine anderweitige Lösung des Problems nicht zur Verfügung steht.

Ausgehend von den vorbeschriebenen Nachteilen des Standes der Technik ist es Aufgabe der vorliegenden Erfindung, ein sitzreinigungsfähiges Doppelsitzventil zu schaffen, bei dem im Sinne einer konsequenten Umsetzung der Sicherheitsphilosophie des Doppelsitzventils jeweils im Zuge der Sitzreinigung des spaltweit von seiner Sitzfläche angelüfteten Schließgliedes eine doppelte und leckageraumgesicherte Abdichtung gegenüber dem durch das andere Schließglied geschlossenen Ventilgehäuseteil gegeben ist.

Diese Aufgabe wird durch die Merkmale des Anspruches 1 gelöst. Vorteilhafte Ausgestaltungen des vorgeschlagenen sitzreinigungsfähigen Doppelsitzventils sind Gegenstand weiterer Unteransprüche.

Der Vorschlag zeigt, wie die doppelte Abdichtung in überraschend einfacher Weise unter den gegebenen Bedingungen realisiert werden kann. Hierzu wird das Doppelsitzventil der gattungsgemäßen Art, wie es hinsichtlich der grundsätzlichen Schließgliedkonfiguration beispielsweise aus der EP-A-0 174 384 zumindest in wesentlichen Merkmalen bekannt ist, am Endabschnitt des schieberartig ausgebildeten, kleineren Schließgliedes (Schieberkolben als aktives Schließglied), bezogen auf seine Längsachse, mit zwei axial beabstandeten radialen Dichtungsmitteln ausgestattet. Zwischen diesen sind im Schieberkolben Durchlaßöffnungen vorgesehen, die die mantelflächenseitige Umgebung des Schieberkolbens mit dem Leckagehohlraum verbinden, der zwischen den beiden Schließgliedern sowohl in der Schließ- als auch in der Offenstellung des Doppelsitzventils gebildet wird. Der Leckagehohlraum ist mit der Umgebung des Doppelsitzventils verbunden, wobei die Verbindung in einem mit einem der Schließglieder verbundenen rohrförmigen Schaft, der durch das zugeordnete Ventilgehäuseteil hindurchgeführt ist und in der Umgebung endet, ausgebildet ist.

Neben einer Hauptverstelleinrichtung zum Öffnen und Schließen des Doppelsitzventils ist darüber hinaus für jedes Schließglied eine zugeordnete Einzelverstelleinrichtung vorgesehen, mit der die Schließglieder durch einen Teilhub spaltweit in eine jeweilige Sitzreinigungsstellung zu überführen sind. Die Sitzreinigung des Schieberkolbens, der kleiner als das zweite Schließglied (passives Schließglied) ausgeführt ist, erfolgt dadurch, daß der Schieberkolben um einen Teilhub entgegen seiner Öffnungsbewegung dergestalt verschoben ist, daß die Durchlaßöffnungen mit dem der freigelegten Sitzfläche benachbarten Ventilgehäuseteil verbunden sind und dabei das leckagehohlraumseitige Dichtungsmittel des Schieberkolbens in der zylindrischen Ventilsitzfläche dichtend verbleibt. In dieser Stellung kann nunmehr Reinigungsmittel an die freigelegte Sitzfläche gelangen, um über die Durchlaßöffnungen in den Leckagehohlraum abzufließen. Da das leckagehohlraumseitige Dichtungsmittel des Schieberkolbens sowie das Dichtungsmittel des zweiten Schließgliedes in ihrer dichtenden Schließlage verbleiben, besteht zwischen dem an die freigelegte Sitzfläche herangeführte Reinigungsmittel und dem anderen, geschlossenen Ventilgehäuseteil eine doppelte Abdichtung, zwischen der der mit der Umgebung verbundene Leckagehohlraum wirksam ist.

Die Sitzreinigung des zweiten Schließgliedes erfolgt dadurch, daß dieses in Richtung seiner normalen Öffnungsbewegung spaltweit verschoben wird, bis die zugeordnete Sitzfläche freigelegt und für das Reinigungsmittel aus dem benachbarten Ventilgehäuseteil zugänglich ist. Der Schieberkolben verbleibt in seiner Schließlage, wobei nunmehr zwischen dem über die freigelegte Sitzfläche einströmenden Reinigungsmittel und dem durch den Schieberkolben verschlossenen Ventilgehäuseteil ebenfalls eine doppelte Abdichtung über die beiden axial beanstandeten Dichtungsmittel im Schieberkolben besteht. Auch hier ist zwischen den beiden Dichtungsmitteln über die vorgeschlagenen Durchlaßöffnungen im Schieberkolben der mit der Umgebung verbundene Leckagehohlraum wirksam.

In den vorstehend beschriebenen zwei Sitzreinigungsstellungen ist jeweils der Bereich zwischen den beiden in ihrer dichtenden Schließlage befindlichen jeweiligen Dichtungsmitteln mit dem Leckagehohlraum verbunden. Dadurch ist sichergestellt, daß bei einem Defekt des der Reinigungsflüssigkeit benachbarten und in seiner Schließlage befindlichen Dichtungsmittels kein Reinigungsmittel unter Druck an dem Dichtungsmittel des anderen Schließgliedes, das sich ebenfalls in seiner Schließlage befindet, ansteht. Da nicht nur die Durchlaßöffnungen insgesamt der vorgenannten US-amerikanischen Vorschrift entsprechend dimensioniert sind oder ohne Schwierigkeit werden können, sondern auch der Verbindungsweg zwischen dem Leckagehohlraum und der Umgebung des Ventils diesbezüglich dimensioniert ist oder werden kann, ist sichergestellt, daß Reinigungsmittelmengen, die über defekte Dichtungsmittel im Zuge der Sitzreinigung anfallen, drucklos in die Umgebung abgeführt werden.

Die erfindungswesentlichen Merkmale des vorgeschlagenen sitzreinigungsfähigen Doppelsitzventils sind in vorteilhafter Weise auf zwei unterschiedliche Doppelsitzventil-Bauarten anwendbar. Eine erste Bauart zeichnet sich dadurch aus, daß am Schieberkolben einerseits der rohrförmige Schaft angeordnet ist, der durch das letzterem benachbarte Ventilgehäuseteil in die Umgebung des Doppelsitzventils hindurchgeführt ist und einen Ablaufauslaß aufnimmt, der durch den Schieberkolben bis in den Leckagehohlraum hindurchgreift und diesen mit der Umgebung des Doppelsitzventils verbindet. Am Schieberkolben ist andererseits eine Ventilstange befestigt, die durch das dieser Seite benachbarte Ventilgehäuseteil hindurchgeführt und mit einem Antrieb des Doppelsitzventils verbunden ist. Bei dieser Doppelsitzventil-Bauart handelt es sich um ein Ventil, welches zur Seite seines Antriebs hin öffnet und dessen Schließglieder auch in dieser Richtung ausbaubar sind und bei dem die Leckage und das bei der Sitzreinigung anfallende Reinigungsmittel zur anderen Seite hin über den Ablaufauslaß abgeführt werden.

Eine zweite Doppelsitzventil-Bauart zeichnet sich dadurch aus, daß am zweiten Schließglied einerseits der rohrförmige Schaft angeordnet ist, der durch das letzterem benachbarte Ventilgehäuseteil in die Umgebung des Doppelsitzventils hindurchgeführt ist und einen Ablaufauslaß aufnimmt, der durch das zweite Schließglied bis in dessen Ausnehmung, die einen Teil des Leckagehohlraumes bildet, hindurchgreift und letzteren mit der Umgebung des Doppelsitzventils verbindet. Auf der anderen Seite des zweiten Schließgliedes greift eine Ventilstange an, die durch das dieser Seite benachbarte Ventilgehäuseteil hindurchgeführt und mit einem Antrieb des Doppelsitzventils verbunden ist. Falls diese Doppelsitzventil-Bauart, wie dies vorgeschlagen wird, einen aus den Ventilgehäuseteilen lösbaren sogenannten Sitzring aufweist, in dem innenseits die zylindrische Ventilsitzfläche für den Schieberkolben vorgesehen ist, steht ein Doppelsitzventil zur Verfügung, das in einer vom Antrieb wegweisenden Richtung öffnet und bei dem die Schließglieder unter den nachfolgend genannten Bedingungen in Richtung des Antriebes ausbaubar sind. Die Leckage und das bei der Sitzreinigung anfallende Reinigungsmittel werden in Richtung der Öffnungsbewegung des Ventils in dessen Umgebung abgeführt. Um die Ausbaubarkeit der Schließglieder in der vorstehend beschriebenen Weise sicherzustellen, wird vorgeschlagen, daß der Sitzring außenseits in einer die Ventilgehäuseteile miteinander verbindenden Verbindungsbohrung und dort mittels einer ersten und einer zweiten Sitzringdichtung dichtend Aufnahme findet, daß er sich im antriebsseitigen Ventilgehäuseteil abstützt, und daß sein kleinster Außendurchmesser größer als der größte Außendurchmesser des zweiten Schließgliedes ist.

Bei beiden vorgenannten Doppelsitzventil-Bauarten wird die bevorzugte Einbaulage derart gewählt, daß der Ablaufauslaß im wesentlichen senkrecht nach unten orientiert ist, so daß die Leckage und das bei der Sitzreinigung anfallende Reinigungsmittel unter dem Einfluß der Schwerkraft nach unten ablaufen können. Darüber hinaus können beide Schließglieder als Schieberkolben mit radialen Dichtungsmitteln ausgebildet sein, wobei der aktive Schieberkolben stets kleiner als der passive ausgeführt ist (EP-A-0 174 384, Figuren 3a bis 3d; EP-A-0 646 741). Es ist aber auch möglich, das passive Schließglied als Sitzteller auszubilden (EP-A-0 174 384, Figuren 4a-4d; DE 38 35 944 A1). Bezogen auf die bevorzugte Einbaulage erfordert ein nach unten öffnendes und nach oben ausbaubares Doppelsitzventil, unabhängig davon, ob es mit zwei Schieberkolben oder einem Schieberkolben und einem Sitzteller ausgebildet ist, den vorstehend erwähnten Sitzring, wie er beispielsweise aus der **DE-PS 501 350** im Grundsatz seit langem bekannt ist.

Bezogen auf die bevorzugte Einbaulage weist ein nach unten öffnendes und nach oben ausbaubares Doppelsitzventil gegenüber der nach oben öffnenden Bauart den Vorteil auf, daß die Verbindungsbohrung zwischen den beiden Ventilgehäuseteilen, in der die zylindrische Ventilsitzfläche ausgebildet ist, in ihrem Durchmesser kleiner ausgeführt werden kann. Dies resultiert aus der Tatsache, daß in der Offenstellung des Ventils lediglich die Ventilstange des Schieberkolbens durch die Verbindungsbohrung hindurchgeführt ist und nicht der rohrförmige Schaft, in dem der Ablaufauslaß unterzubringen ist. Bei letzterem besteht in bestimmten Anwendungsfällen das Bedürfnis, ihn mit einem möglichst großen Durchtrittsquerschnitt zu dimensionieren.

Die vorgeschlagenen Durchlaßöffnungen lassen sich ohne Schwierigkeit insgesamt derart dimensionieren, daß die Forderung des US-amerikanischen "3A-Standards" und der "FDA-Regularien" ohne Einschränkung erfüllt sind. Dazu sind sie derart auszuführen, daß sie insgesamt mindestens einen dem Nennquerschnitt des größten an das Ventil angeschlossenen Rohres entsprechenden Durchtrittsquerschnitt aufweisen.

Damit durchgehend auf dem gesamten Verbindungsweg, ausgehend von den Durchlaßöffnungen über den Leckagehohlraum bis in die Umgebung des Doppelsitzventils, keine Verengung eintritt, wird weiterhin vorgeschlagen, daß der Ablaufauslaß auf seiner gesamten Länge mindestens einen dem Nennquerschnitt des größten an das Ventil angeschlossenen Rohres entsprechenden Durchtrittsquerschnitt aufweist.

Das vorgeschlagene Doppelsitzventil sieht zwei grundsätzliche Ausführungen vor, soweit es das Zusammenwirken zwischen dem Schieberkolben und dem zweiten Schließglied in der Offensteliung des Doppelsitzventils betrifft. In einer ersten Ausführungsform wird ein mit den beiden axial beabstandeten Dichtungsmitteln ausgestatteter Endabschnitt des Schieberkolbens in die Ausnehmung des zweiten Schließgliedes hineingefahren, bevor letzteres öffnet. Dabei finden beide Dichtungsmittel dort dichtend Aufnahme. Hier macht das vorgeschlagene Doppelsitzventil von einem beispielsweise aus der **GB-A-668 563** (insbesondere **Figuren 15** und **16)** oder aus der **FR-A-1 204 043** bekannten Merkmal Gebrauch, welches vorsieht, daß der Endabschnitt des Schieberkolbens mit seinem Dichtungsmittel im Zuge der Öffnungsbewegung des Ventils in eine Ausnehmung des zweiten Schließgliedes verbracht und dort von einer Umfangswand der Ausnehmung vor dem Einfluß des das Ventil beaufschlagenden Fluids geschützt und gestützt wird, bevor das zweite Schiießglied öffnet.

In einer zweiten Ausführungsform wird nur das dem stirnseitigen Ende des Schieberkolbens unmittelbar benachbarte, das leckagehohlraumseitige Dichtungsmittel in eine Ausnehmung des zweiten Schließgliedes hineingefahren, ohne daß es dort gegenüber einer Umfangswand der Ausnehmung dichtet, während das andere Dichtungsmittel des Schieberkolbens lediglich mit dem die Ausnehmung umgebenen Ende des zweiten Schließgliedes dichtend kontaktiert wird. Diese Kontaktierung kann bezüglich des Dichtungsmittels radial, radial/axial oder axial (bei ausreichender elastischer Rückverformung des Dichtungsmittels nach Verlassen der zylindrischen Ventilsitzfläche) erfolgen. Bei den vorgenannten Abdichtungen handelt es sich demnach nicht um ein Hineinfahren der Dichtung in die Ausnehmung, sondern um ein sogenanntes außenseitiges 'Andocken' an das Ende der Ausnehmung (siehe hierzu auch **WO-A-9508730**).

Der Sachverhalt, daß das in die Ausnehmung hineingefahrene Dichtungsmittel von der Umfangswand mit einem Umfangsringspalt umschlossen wird, kann vorteilhaft dazu genutzt werden, in der Offenstellung des Ventils dieses Dichtungsmittel einer Reinigung zu unterziehen. Zu diesem Zweck wird beispielsweise Reinigungsmittel von außerhalb des Doppelsitzventils über einen zwischen der Ventilstange und einer diese umgebenden Hohlstange gebildeten Ringspalt zugeführt und zwecks Bespülung des vorgenannten Dichtungsmittels dem besagten Umfangsringspalt zugeleitet, von wo es dann über die Durchlaßöffnungen zwischen den beiden im Schieberkolben angeordneten Dichtungsmitteln in den Leckagehohlraum und von dort über den Ablaufauslaß in die Umgebung abgeführt wird. Die Zuführung von Reinigungsmittel kann alternativ auch über eine in der innenliegenden Ventilstange angeordnete Verbindungsbohrung erfolgen.

Um die Reinigungsmittelmenge im Zuge der jeweiligen Sitzreinigung zu bemessen und zu begrenzen, wird vorgeschlagen, daß der Schieberkolben zwischen dem ventilgehäuseseitigen Dichtungsmittel und den Durchlaßöffnungen einen im wesentlichen zylindrischen Ansatz aufweist, der außenseits mit der zylindrischen Ventilsitzfläche einen Drosselringspalt bildet.

Im Bezug auf das zweite Schließglied ist diesbezüglich vorgesehen, daß dieses an seinem die Ausnehmung umgebenden Ende einen im wesentlichen zylindrischen Ansatz aufweist, der außenseits mit einer zweiten Ventilsitzfläche einen Drosselringspalt bildet.

Die vorgeschlagenen Grundsatzlösungen gemäß der Erfindung sind, soweit sie durch das Zusammenwirken zwischen dem Schieberkolben und dem zweiten Schließglied in der Offenstellung des Doppelsitzventils gekennzeichnet und an den beiden vorstehenden Ausführungsformen dargestellt sind, auch auf ein Doppelsitzventil anwendbar, bei welchem die Öffnungsbewegung, bezogen auf die bevorzugte Einbaulauge, nach unten erfolgt (zweite vorstehend beschriebene Doppelsitzventil-Bauart). Das unabhängig betätigte Schließglied (aktives Schließglied) ist dabei in Form eines Schieberkolbens oberhalb des abhängig betätigten Schließgliedes (passives Schließglied) angeordnet. Ersteres kommt bei seiner Öffnungsbewegung nach unten am anderen zur Anlage und überführt dieses gleichfalls in die Offenstellung. Dabei können beide Schließglieder als Schieberkolben mit radialen Dichtungsmitteln ausgebildet sein, wie dies bei den beiden vorstehend beschriebenen Ausführungsformen der Fall ist (z.B. Ausnehmung gemäß EP-A-0 174 384, Figuren 3a-3d), oder aber es liegt eine Ausführungsform gemäß EP-A-0 646 741 vor. Es ist aber auch möglich, eine Schließgliedkonfiguration mit einem Schieberkolben und einem Sitzteller zu wählen, wie sie die Druckschriften EPA-0 174 384, Figur 4a-4d, oder die **EP-A-0 039 319, Figuren 1** und **2,** vorsehen, wobei diese Schließgliedanordnungen in Anwendung auf die vorliegende Erfindung um eine waagerechte Achse gespiegelt sind.

Um bei einer Schließgliedkonfiguration mit einem als Schieber und einem als Sitzteller ausgebildeten Schließglied eine Ausbaubarkeit nach oben zu gewährleisten, kann wiederum der vorstehend erwähnte Sitzkörper oder Sitzring vorgesehen werden (siehe DE-PS 501 350).

Darüber hinaus wird eine weitere Ausführungsform vorgeschlagen, die den Erfindungsgedanken der doppelten Abdichtung im Falle der Sitzreinigung aufgreift, jedoch das mittlere der drei zur Anwendung kommenden Dichtungsmittel, das leckagehohlraumseitige, in einem eigenständigen Teil des Schieberkolbens anordnet, der relativ beweglich zum restlichen Schieberkolben ausgebildet ist und sich einerseits gegen letzteren und andererseits gegen das zweite Schließglied unmittelbar oder mittelbar unter einer Vorspannung federnd abstützt. Dabei besitzt dieses dritte Schließglied zwischen den beiden anderen eine begrenzte Beweglichkeit, wobei es mit beiderseitiger, aber auch ohne beiderseitige Federbeaufschlagung beim Öffnungs- und Schließvorgang sozusagen 'mitgeschleppt' wird. Es ist darüber hinaus auch vorgesehen, daß der das leckagehohlraumseitige Dichtungsmittel aufnehmende, eigenständige Teil des Schieberkolbens mit dem Antrieb des Doppelsitzventils verbunden und dort steuerbar ist. In den beiden Sitzreinigungsstellungen ist das besagte eigenständige Teil derart angeordnet, daß seine Dichtungsmittel die Funktion des leckageraumseitgen zweiten Dichtungsmittels der eingangs beschriebenen Ausführungsformen übernimmt.

Die Dichtungsmittel des Schieberkolbens sind für die vorstehend beschriebenen jeweiligen Ausführungsformen und Bauarten entweder als diskrete Dichtungen ausgeführt oder aber sie werden durch Beschichtung oder Ummantelung des in Frage kommenden Endabschnittes des Schieberkolbens mit einem geeigneten Dichtungsmaterial realisiert. Desweiteren ist vorgesehen, daß wenigstens der in Frage kommende Endabschnitt des Schieberkolbens insgesamt aus einem geeigneten Dichtungsmaterial ausgeführt ist.

Das mit den vorstehend beschriebenen erfindungsgemäßen Merkmalen ausgestattete Doppelsitzventil läßt sich uneingeschränkt auf sämtliche bislang bekannt gewordenen Anwendungs- und Funktionsvarianten von Doppelsitzventilen anwenden, wie beispielsweise die Ausführung als sog. Tankbodenventil, wobei in diesem Falle am Schieberkolben der rohrförmige Schaft mit einem darin angeordneten Ablaufauslaß entfällt. Letzterer ist vielmehr in einem rohrförmigen Schaft, der am zweiten Schließglied angeordnet ist, vorgesehen. Zum Leckagehohlraum hin ist dabei der Schieberkolben derart geöffnet, daß, von den Durchlaßöffnungen ausgehend und im weiteren Durchtrittsquerschnitt von diesen determiniert, eine ungeschmälerte Verbindung zwischen den Durchlaßöffnungen und dem Leckagehohlraum besteht.

Ausführungsbeispiele der Erfindung sind in der Zeichnung dargestellt und werden nachfolgend beschrieben. Es zeigen
- **Figur 1**: einen Mittelschnitt durch eine erste Ausführungsform des vorgeschlagenen Doppelsitzventils einer ersten Bauart in seiner Schließstellung;
- **Figur 2**: eine ausschnittsweise Darstellung in vergrößertem Maßstab der beiden Schließglieder in ihrem Sitzbereich, wobei die Schließstellung des Doppelsitzventils dargestellt ist und der Durchtrittsquerschnitt der Durchiaßöffnungen insgesamt etwa einem der Nennweite des größten an das Ventil angeschlossenen Rohres entsprechenden Querschnitt entspricht;
- **Figur 3**: eine Darstellung gemäß Figur 2, wobei die Durchlaßöffnungen einen geringeren Durchtrittsquerschnitt als jene gemäß Figur 2 aufweisen;
- **Figur 4**: eine vergrößerte Darstellung des Sitzbereichs des Ventils gemäß Figur 3, wobei die Schließglieder eine sog. Zwischenstellung einnehmen, in der das erste Schließglied, der Schieberkolben, im zweiten Schließglied Aufnahme findet, bevor letzteres öffnet;
- **Figur 5**: die Schließglieder gemäß Figur 3 in der Offenstellung des Doppelsitzventils;
- **Figur 6**: eine ausschnittsweise Darstellung in vergrößertem Maßstab der beiden Schließglieder in einer zweiten Ausführungsform, wobei sich die Schließglieder in ihrer Offenstellung befinden und zwischen dem in der Ausnehmung aufgenommen Dichtungsmittel und der Umfangswand der Ausnehmung ein Umfangsringspalt vorgesehen ist;
- **Figur 6a**: eine vergrößerte Darstellung der Anordnung gemäß Figur 6 im Bereich der Ausnehmung;
- **Figur 7**: die Schließglieder des Doppelsitzventils in der ersten Ausführungsform gemäß Figur 3 in ihrem Sitzbereich, wobei der Schieberkolben in seine Sitzreinigungsstellung überführt ist;
- **Figur 8**: die Schließgliedanordnung gemäß Figur 3, wobei das zweite Schließglied in seine Sitzreinigungssstellung verschoben ist;
- **Figur 9**: eine zweite vorteilhafte Bauart des vorgeschlagenen sitzreinigungsfähigen Doppelsitzventils in seiner Schließstellung, bei dem die Schließglieder, bezogen auf die bevorzugte Einbaulage, nach unten öffnen, jedoch nach oben, in Richtung des Antriebs, in Verbindung mit einem Sitzring ausbaubar sind und
- **Figur 9a**: das sitzreinigungsfähige Doppelsitzventil gemäß Figur 9 in seiner Offenstellung.

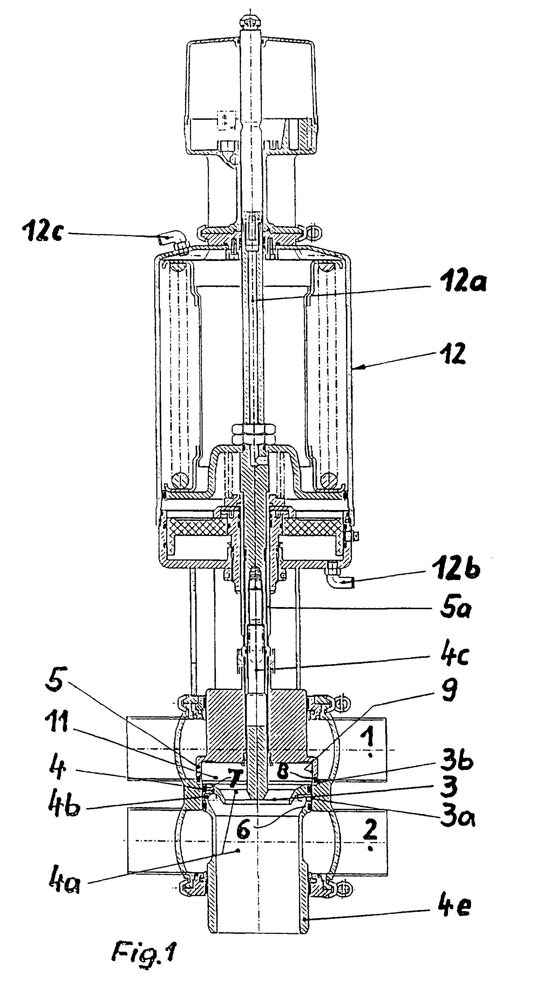

Das Doppelsitzventil in einer ersten Bauart (**Figur 1**) besteht aus einem ersten und einem zweiten Ventilgehäuseteil 1 bzw. 2. Beide sind über eine Verbindungsbohrung 3, die innenseits die zylindrische Ventilsitzfiäche 3a bildet, miteinander verbunden. Ein erstes, als Schieberkolben ausgebildetes Schließglied 4 (aktives Schließglied) findet in der Schließstellung des Doppelsitzventils in der zylindrischen Ventilsitzfläche 3a dichtend Aufnahme. Hierzu sind an einem End-abschnitt des Schieberkolbens 4, bezogen auf seine Längsachse, zwei axial beabstandete radiale Dichtungsmittel 6 und 7, im folgenden als ventilgehäuseseitiges Dichtungsmittel 6 bzw. leckagehohlraumseitiges Dichtungsmittel 7 bezeichnet, vorgesehen. Ein zweites, ebenfalls als Schieberkolben ausgebildetes Schließglied 5 findet in der Schließstellung des Doppelsitzventils in einer zweiten Ventilsitzfläche 3b, die im wesentlichen ebenfalls zylindrisch ausgeführt ist, Aufnahme, gegenüber der es über ein drittes, radial wirkendes Dichtungsmittel 8 abgedichtet ist. Das zweite Schließglied 5 kann auch als Sitzteller mit einem axial wirkenden Dichtungsmittel 8 ausgeführt sein (z.B. wie in EP 0 174 384, Figuren 4a-4d, oder EP 0 039 319, Figuren 1 und 2).

Die beiden Schließglieder 4 und 5 bilden sowohl in der dargestellten Schließ- als auch in der Offenstellung zwischen sich einen Leckagehohlraum 11, der über einen in einem rohrförmigen Schaft 4e des Schieberkolbens 4 angeordneten Ablaufauslaß 4a mit der Umgebung des Doppelsitzventils verbunden ist.

Der Schieberkolben 4 ist mit einer Ventilstange 4c verbunden, die nach oben aus dem ersten Ventilgehäuseteil 1 heraus- und in einen Antrieb 12 hineingeführt ist. Sie wird von einer rohrförmigen Hohlstange 5a konzentrisch umschlossen, die einerseits mit dem zweiten Schließglied 5 verbunden und andererseits ebenfalls in den Antrieb 12 hineingeführt ist. Der Antrieb 12 verfügt über eine nicht näher bezeichnete Hauptverstelleinrichtung, mit der das Doppelsitzventil geöffnet und geschlossen werden kann. Der Öffnungs- und Schließvorgang des Doppelsitzventils erfolgt dadurch, daß Druckmittel, vorzugsweise Druckluft, über eine in der Ventilstange 4c angeordnete Druckmittelbohrung 12a dem Antrieb 12 zu- oder aus dem Antrieb 12 abgeführt wird. Zum Zwecke der Öffnung des Ventils wird der Schieberkolben 4 in eine Ausnehmung 9 des zweiten Schließgliedes 5 hineingefahren, kommt an letzterem zur Anlage und überführt es bei seiner weiteren Öffnungsbewegung gleichfalls in die Offenstellung. Die Überführung der Schließglieder 4,5 in die jeweilige Schließstellung des Doppelsitzventils erfolgt sinngemäß in umgekehrter Reihenfolge.

Zum Zwecke des spaltweiten Anhebens der Schließglieder 4 und 5 von ihrer jeweiligen Sitzfläche 3a bzw. 3b sind im Antrieb 12 nicht näher bezeichnete Einzelverstelleinrichtungen vorgesehen, die zum einen an der Ventilstange 4c (Betätigung über einen Druckmittelanschluß 12c für die Bewegung der Ventilstange 4c nach unten und damit für die Durchführung der Sitzreinigung des Schieberkolbens 4) und zum anderen an der Hohlstange 5a (Betätigung über einen Druckmittelanschluß 12d für die Bewegung der Hohlstange 5a nach oben und damit für die Durchführung der Sitzreinigung des zweiten Schließgliedes 5) angreifen.

Die vorgeschlagenen Merkmale gemäß der Erfindung und ihre Wirkungsweise werden nachfolgend im Rahmen der ersten Ausführungsform des Doppelsitzventils der ersten Bauart anhand der Figuren 2 bis 8 erläutert.

**Figur 2** zeigt die beiden axial beabstandeten radialen Dichtungsmittel, das ventilgehäuseseitige Dichtungsmittel 6 und das leckagehohlraumseitige Dichtungsmittel 7, zwischen denen im Schieberkolben 4 Durchlaßöffnungen 4b vorgesehen sind, die die mantelflächenseitige Umgebung des Schieberkolbens 4 mit dem Leckagehohlraum 11 verbinden. In der dargestellten Lage dichten die beiden Dichtungsmittel 6 und 7 in der zylindrischen Ventilsitzfläche 3a, während das im zweiten Schließglied 5 vorgesehene dritte Dichtungsmittel 8 gegen die zweite Ventilsitzfläche 3b abgedichtet ist. Im zweiten Schließglied 5 befindet sich eine im wesentlichen zylindrische Ausnehmung 9, deren Umfangswand durchmessergleich und fluchtend mit der zylindrischen Ventilsitzfläche 3a ausgeführt ist.

**Figur 3** zeigt im Vergleich zu Figur 2 eine andere, kleinere Dimensionierung der Durchlaßöffnungen 4b im Schieberkolben 4, wobei die Durchlaßöffnungen 4b mit Blick auf die Erfüllung des sogenannten US-amerikanischen "3A-Standards" derart dimensioniert werden können (Figur 2), daß sie insgesamt mindestens einen dem Nennquerschnitt des größten an das Ventil angeschlossenen Rohres entsprechenden Durchtrittsquerschnitt aufweisen.

In der Zwischenstellung (**Figur 4**) befindet sich der Schieberkolben 4 mit seinem Endabschnitt in der Ausnehmung 9 des zweiten Schließgliedes 5, wo beide Dichtungsmittel 6 und 7 dichtend Aufnahme finden. Das zweite Schließglied 5 hat in dieser Stellung im Zuge der Öffnungsbewegung seine Schließlage noch nicht verlassen, so daß sich das dritte Dichtungsmittel 8 noch im dichtenden Eingriff mit der zweiten Ventilsitzfläche 3b befindet.

**Figur 5** zeigt die Offenstellung des Doppelsitzventils. Die Stellung der Schließglieder 4 und 5 zueinander hat sich nicht verändert, jedoch hat das zweite Schließglied 5 mit seinem Dichtungsmittel 8 die zweite Ventilsitzfläche 3b verlassen.

Die zweite Ausführungsform des vorgeschlagenen sitzreinigungsfähigen Doppelsitzventils der ersten Bauart (**Figuren 6 und 6a**) zeigt, daß in der Offensteliung des Doppelsitzventils die radiale Erstreckung einer Umfangswand der Ausnehmung 9 in ihrem das leckagehohlraumseitige Dichtungsmittel 7 umfassenden Bereich derart ausgestaltet ist, daß zwischen dem Dichtungsmittel 7 und der Umfangswand der Ausnehmung 9 ein Umfangsringspalt 10 gebildet wird. Das ventilgehäuseseitige Dichtungsmittel 6 dichtet dabei an dem die Ausnehmung 9 umgebenden Ende, und zwar kann es sich hierbei um einen ausschließlich axialen Dichtungskontakt, um einen radialen/axialen oder aber um einen ausschließlich radialen handeln. In jedem Falle wird auf das Hineinfahren des ventilgehäuseseitigen Dichtungsmittels 6 in die Ausnehmung 9 verzichtet. Es handelt sich hierbei vielmehr um ein 'Andocken' am endseitigen Abschnitt der Ausnehmung 9. An die Ausnehmung 9 selbst sind in ihrem Innenbereich keine besonderen Anforderungen hinsichtlich ihrer geometrischen Ausgestaltung zu stellen. Es muß lediglich sichergestellt sein, daß der Umfangsringspalt 10 zwischen der Umfangswand der Ausnehmung 9 und dem leckagehohlraumseitigen Dichtungsmittel 7 gegeben ist. Eine im wesentlichen zylindrische Form der Ausnehmung 9 ist zwingend nicht mehr erforderlich, wie dies beispielsweise bei der vorstehend vorgeschlagenen ersten Ausführungsform der Fall ist. Der Umfangsringspalt 10 zwischen dem leckagehohlraumseitigen Dichtungsmittel 7 und der Umfangswand der Ausnehmung 9 ermöglicht eine Spülung und Reinigung dieses Dichtungsmittels 7 sowie des Umfangsringspaltes 10 selbst. Hierzu wird dem Umfangsringspalt 10 Reinigungsmittel R* beispielsweise von außerhalb des Doppelsitzventils über einen zwischen der Ventilstange 4c und einer diese umgebenden Hohlstange 5a (siehe auch Figur 1) gebildeten Ringspalt oder alternativ über eine Verbindungsbohrung innerhalb der innenliegenden Ventilstange 4c zugeführt.

Bei der Sitzreinigung des Schieberkolbens 4 (**Figur 7**) wird dieser um einen Teilhub in Richtung des zugeordneten Ventilgehäuseteils 2, d.h. entgegen seiner regulären Öffnungsbewegung, verschoben, so daß das ventilgehäuseseitige Dichtungsmittel 6 nicht mehr im Eingriff mit der zylindrischen Ventilsitzfläche 3a steht. Reinigungsmittel R gelangt nun über die freigelegte Ventilsitzfläche 3a und anschließend über die Durchlaßöffnungen 4b in den Leckagehohlraum 11, um von dort über den Ablaufauslaß 4a in die Umgebung des Doppelsitzventils abzufließen. Die Begrenzung der Reinigungsmittelmenge R erfolgt über einen sogenannten Drosselringspalt zwischen der ersten zylindrischen Ventilsitzfläche 3a und einem im wesentlichen zylindrischen Ansatz 4d, der zwischen dem ventilgehäuseseitigen Dichtungsmittel 6 und den Durchlaßöffnungen 4b vorgesehen ist.

Zwischen dem Reinigungsmittelfluß R und dem geschlossenen ersten Ventilgehäuseteil 1, in dem ggf. Produkt anstehen kann, befindet sich in der dargestellten Sitzreinigungsstellung eine doppelte Abdichtung, gegeben durch das leckagehohlraumseitge Dichtungsmittel 7 im Schieberkolben 4 und das dritte Dichtungsmittel 8 im zweiten Schließglied 5. Für den Fall, daß das leckagehohlraumseitige Dichtungsmittel 7 einen Defekt aufweist, kann Reinigungsmittel R, das diese defekte Abdichtungsstelle zum zweiten Schließglied 5 hin passiert, über den Leckagehohlraum 11 und den sich dort an letzteren anschließenden Ablaufauslaß 4a drucklos abgeführt werden. Eine Beaufschlagung des dritten Dichtungsmittels 8 unter Druck durch das vorgenannte Reinigungsmittel R ist damit ausgeschlossen.

Der umgekehrte Fall, daß das dritte Dichtungsmittel 8 defekt ist und ggf. Produkt durch diese Abdichtungsstelle hindurchtritt, führt lediglich dazu, daß der Leckagehohlraum 11 seine ihm zugedachte Funktion wahrnimmt und diese Leckage drucklos abführt. Eine Vermischung zwischen Produkt und Reinigungsmittel ist praktisch ausgeschlossen, da sich diese Situation nur ergäbe, wenn die beiden in Frage kommenden Dichtungen 7 und 8 gleichzeitig defekt und außerdem ein druckloser Abfluß von Reinigungsmittel R oder Produkt nicht sichergestellt wäre. Dies ist aufgrund der Dimensionierung der Durchtrittsquerschnitte der Durchlaßöffnungen 4b und des Ablaufauslasses 4a mit Sicherheit auszuschließen.

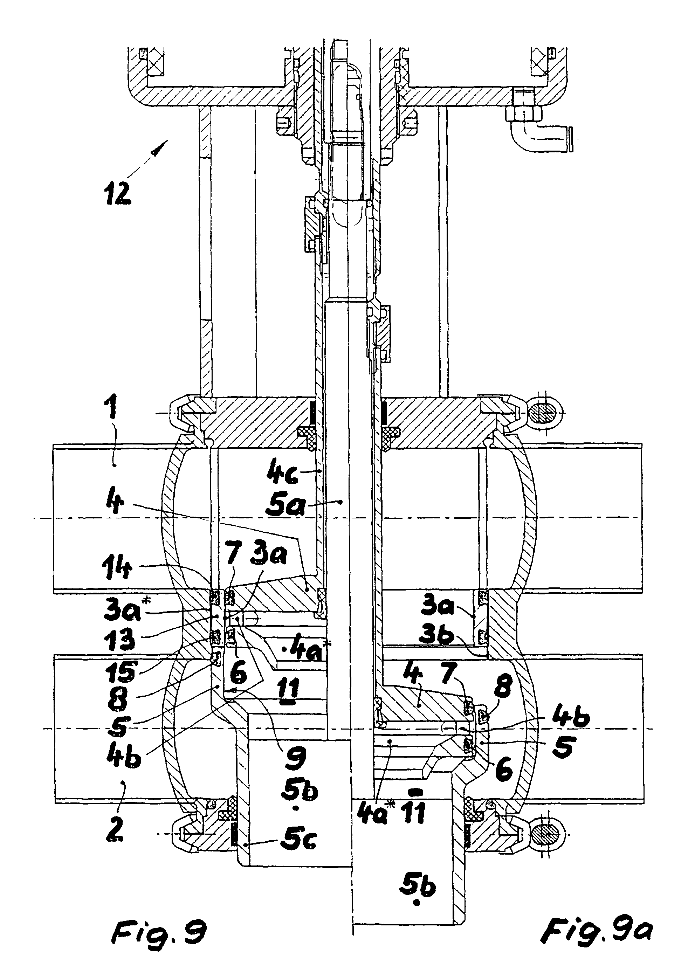

Bei der Sitzreinigung des zweiten Schließgliedes 5 (**Figur 8**) wird dessen Dichtungsmittel 8 spaltweit von seiner zugeordneten zweiten Ventilsitzfläche 3b entfernt. Dies erfolgt dadurch, daß das zweite Schließglied 5 in Richtung seines zugeordneten Ventilgehäuseteils 1 um einen Teilhub verschoben wird. Der Schieberkolben 4 verbleibt mit seinen beiden Dichtungsmitteln 6 und 7 in seiner Schließlage in der zylindrischen Ventilsitzfläche 3a. Reinigungsmittel R kann nun über die freigelegte zweite Ventilsitzfläche 3b in den Leckagehohlraum 11 einströmen. Die Begrenzung der Reinigungsmittelmenge R erfolgt auch hier über einen sogenannten Drosselringspalt zwischen der zweiten Ventilsitzfläche 3b und einem im wesentlichen zylindrischen Ansatz 5d, der am die Ausnehmung 9 umgebenden Ende des zweiten Schließgliedes 5 vorgesehen ist.

Falls das leckagehohlraumseitige Dichtungsmittel 7 einen Defekt aufweist, gelangt das ggf. über diesen Defekt hindurchtretende Reinigungsmittel R über die Durchlaßöffnungen 4b unmittelbar in den sich an den Leckagehohlraum 11 anschließenden Ablaufauslaß 4a, um von dort, ebenfalls ohne Druckbeaufschlagung des ventilgehäuseseitigen Dichtungsmittels 6, in die Umgebung des Doppelsitzventils abgeführt zu werden.

Die **Figuren 9** und **9a** zeigen ein sitzreinigungsfähiges Doppelsitzventil der zweiten Bauart, welches mit den vorgeschlagenen Merkmalen gemäß der Erfindung ausgestattet ist und dessen Schließglieder 4 und 5, bezogen auf die bevorzugte Einbaulage, nach unten öffnen und nach oben, in Richtung des Antriebes, ausbaubar sind. Bei der nachfolgenden Beschreibung wird nur auf die wesentlichen Unterschiede zur ersten Bauart gemäß Figur 1 hingewiesen. Ein wesentlicher Unterschied besteht darin, daß in einer die beiden Ventilgehäuseteile 1 und 2 miteinander verbindenden Verbindungsbohrung 3a* ein lösbarer Sitzring 13 mittels zweier Sitzringdichtungen 14 und 15 dichtend Aufnahme findet, in dem innenseits die zylindrische Ventilsitzfläche 3a vorgesehen ist. An das zweite Schließglied 5 schließt sich ein rohrförmiger Schaft 5c an, der durch das benachbarte Ventilgehäuseteil 2 in den Umgebung des Doppelsitzventils hindurchgeführt ist und einen Ablaufauslaß 5b aufnimmt. Letzterer greift bis in die Ausnehmung 9 hindurch, die einen Teil des Leckagehohlraumes 11 bildet, und verbindet dadurch den Leckagehohlraum 11 mit der Umgebung des Doppelsitzventils. Der Schieberkolben 4 weist die beiden axial beabstandeten Dichtungsmittel 6 und 7 auf, zwischen denen im Schieberkolben 4 die Durchlaßöffnungen 4b vorgesehen sind, die die mantelflächenseitige Umgebung des Schieberkolbens 4 mit dem Leckagehohlraum 11, im dargestellten Ausführungsbeispiel über eine zentrale Öffnung 4a* in der leckagehohlraumseitigen Stirnfläche des Schieberkolbens 4, verbinden. Der lösbare Sitzring 13 stützt sich vorzugsweise im antriebsseitigen Ventilgehäuseteil 1 ab, wobei sein kleinster Außendurchmesser größer als der größte Außendurchmesser des zweiten Schließgliedes 5 ausgeführt ist. Durch diese beiden letztgenannten Merkmale ist die gewünschte Ausbaubarkeit der Schließglieder 4 und 5 in Richtung des Antriebes durch Öffnen des antriebsseitigen Ventilgehäuseteils 1 sichergestellt.

Man erkennt weiterhin (**Figur 9a**), daß in der Offenstellung des Doppelsitzventils der Durchtrittsquerschnitt des Doppelsitzventils im Bereich der zylindrischen Ventilsitzfläche 3a nur durch den Querschnitt der Hohlstange 4c geschmälert ist. Hieraus ergeben sich Vorteile gegenüber der ersten Bauart des Doppelsitzventils gemäß Figur 1, bei der in der Offenstellung der entsprechende Durchtrittsquerschnitt des Doppelsitzventils im Sitzbereich durch den relativ großen Querschnitt des rohrförmigen Schaftes 4e, der den Ablaufauslaß 4a aufnimmt, reduziert ist.

Der Schieberkolben 4 (Figuren 9, 9a) kann auch mit einem sogenannten Druckausgleichskolben versehen werden, der in Richtung des Antriebes 12 aus dem Ventilgehäuseteil 1 herausgeführt ist und die Druckkräfte auf die stirnseitige Fläche des Schieberkolbens 4 im Bereich des Ventilgehäuseteils 1 kompensiert.

Bei den vorstehend beschriebenen Doppelsitzventil-Bauarten und ihren Ausführungsformen kann die Reinigungsmittelmenge im Zuge der Sitzreinigung auch durch ein an sich bekanntes taktweises Ansteuern des in Frage kommenden Schließgliedes determiniert und ggf. begrenzt werden.

Falls ein geeigneter Antrieb zur Verfügung steht, ist es darüber hinaus generell möglich, d.h. unabhängig davon, ob das in Frage kommende Schließglied taktweise oder einmalig spaltweit von seiner Sitzfläche angelüftet wird, das in seiner Schließlage befindliche andere Schließglied, falls es als Schieberkolben ausgebildet ist, in Richtung des ggf. produktführenden Ventilgehäuseteils entweder einmalig oder oszillierend zu verschieben, so daß ein Teil der zugeordneten Sitzfläche dadurch freigelegt und gereinigt wird (sog. Sitzreinigung durch 'Wischen').

## Patentansprüche

1. Sitzreinigungsfähiges Doppelsitzventil mit zwei seriell angeordneten, relativ zueinander bewegbaren Schließgliedern (4,5), die in der Schließstellung des Ventils das Überströmen von Fluiden von einem Ventilgehäuseteil (1,2) in ein anderes (2 bzw. 1) verhindern, die sowohl in der Schließ- als auch in der Offenstellung einen Leckagehohlraum (11) zwischen sich begrenzen, der über einen mit einem der Schließglieder (4,5) verbundenen rohrförmigen Schaft (4e;5c) eine Verbindung mit der Umgebung des Ventils aurweist, wobei ein als Schieberkolben ausgebildetes erstes Schließglied (4) mit einem mit radialen Dichtungsmittein (6,7) ausgestatteten Endabschnitt in der Schließstellung des Ventils in einer zylindrischen Ventilsitzfläche (3a) einer die Ventilgehäuseteile (1,2) miteinander verbindenden Verbindungsbohrung (3;3a*) dichtend Aufnahme findet und im Zuge seiner Öffnungsbewegung in einer innerhalb eines zweiten Schließgliedes (5) vorgesehenen, mit der zylindrischen Ventilsitzfläche (3a) fluchtenden Ausnehmung (9) dichtend aufgenommen wird, bevor das zweite Schließglied (5) durch das erste (4) gleichfalls in die Offenstellung überführt wird, und mit Schließgliedem (4,5), die unabhängig voneinander durch einen Teilhub jeweils spaltweit in eine Sitzreinigungstellung zwecks Spülung ihrer Sitzflächen (3a,3b) überführbar sind, **dadurch gekennzeichnet,**
• **daß** der Endabschnitt des Schieberkolbens (4), bezogen auf seine Längsachse, zwei axial beabstandete radiale Dichtungsmittel (6 und 7) aufweist,
• zwischen denen im Schieberkolben (4) Durchlaßöffnungen (4b) vorgesehen sind, die die mantelfiächenseitige Umgebung des Schieberkolbens (4) mit dem Leckagehohlraum (11) verbinden,
• **daß** beide Dichtungsmittel (6,7)
• in der Schließstellung des Doppelsitzventils in der zylindrischen Ventilsitzfläche (3a) dichtend Aufnahme finden und
• in der Offenstellung in die Ausnehmung (9) verbracht werden,
• und **daß** in der Sitzreinigungstellung des Schieberkolbens (4) dieser um einen Teilhub entgegen seiner Öffnungsbewegung dergestalt verschoben ist, daß die Durchlaßöffnungen (4b) mit dem der freigelegten Sitzfläche benachbarten Ventilgehäuseteil (2;1) verbunden sind und dabei das leckagehohlraumseitige Dichtungsmittel (7) des Schieberkolbens (4) in der zylindrischen Ventilsitzfläche (3a) dichtend verbleibt.

2. Sitzreinigungsfähiges Doppelsitzventil nach Anspruch 1, **dadurch gekennzeichnet, daß** am Schieberkolben (4) einerseits der rohrförmige Schaft (4e) angeordnet ist, der durch das letzterem benachbarte Ventilgehäuseteil (2) in die Umgebung des Doppelsitzventils hindurchgeführt ist und einen Ablaufauslaß (4a) aufnimmt, der durch den Schieberkolben (4) bis in den Leckagehohlraum (11) hindurchgreift und letzteren mit der Umgebung des Doppelsitzventils verbindet, und daß am Schieberkolben (4) andererseits eine Ventilstange (4c) angreift, die durch das dieser Seite benachbarte Ventilgehäuseteil (1) hindurchgeführt und mit einem Antrieb (12) des Doppelsitzventils verbunden ist.

3. Sitzreinigungsfähiges Doppelsitzventil nach Anspruch 1, **dadurch gekennzeichnet, daß** am zweiten Schließglied (5) einerseits der rohrförmige Schaft (5c) angeordnet ist, der durch das letzterem benachbarte Ventilgehäuseteil (2) in die Umgebung des Doppelsitzventils hindurchgeführt ist und einen Ablaufauslaß (5b) aufnimmt, der durch das zweite Schließglied (5) bis in die Ausnehmung (9), die einen Teil des Leckagehohlraumes (11) bildet, hindurchgreift und letzteren mit der Umgebung des Doppelsitzventils verbindet, und daß am zweiten Schließglied (5) andererseits eine Ventilstange (5a) angreift, die durch das dieser Seite benachbarte Ventilgehäuseteil (1) hindurchgeführt und mit einem Antrieb (12) des Doppelsitzventils verbunden ist.

4. Sitzreinigungsfähiges Doppelsitzventil nach Anspruch 3, **dadurch gekennzeichnet, daß** die zylindrische Ventilsitzfläche (3a) innenseits in einem aus den Ventilgehäuseteilen (1,2) lösbaren Sitzring (13) vorgesehen ist, der außenseits in einer die Ventilgehäuseteile (1,2) miteinander verbindenden Verbindungsbohrung (3a*) und dort mittels einer ersten und einer zweiten Sitzringdichtung (14,15) dichtend Aufnahme findet, der sich im antriebsseitigen Ventilgehäuseteil (1) abstützt und dessen kleinster Außendurchmesser größer als der größte Außendurchmesser des zweiten Schließgliedes ist.

5. Sitzreinigungsfähiges Doppelsitzventil nach einem der Ansprüche 1 bis 4, **dadurch gekennzeichnet, daß** die Durchlaßöffnungen (4b) insgesamt mindestens einen dem Nennquerschnitt des größten an das Ventil angeschlossenen Rohres entsprechenden Durchtrittsquerschnitt aufweisen.

6. Sitzreinigungsfähiges Doppelsitzventil nach einem der Ansprüche 1 bis 5, **dadurch gekennzeichnet, daß** der Ablaufauslaß (4a;5b) auf seiner gesamten Länge mindestens einen dem Nennquerschnitt des größten an das Ventil angeschlossenen Rohres entsprechenden Durchtrittsquerschnitt aufweist.

7. Sitzreinigungsfähiges Doppelsitzventil nach einem der Ansprüche 1 bis 6, **dadurch gekennzeichnet, daß** die radiale Erstreckung einer Umfangswand der Ausnehmung (9) in ihrem das leckagehohlraumseitige Dichtungsmittel (7) in der Offenstellung des Doppelsitzventils umfassenden Bereich derart ausgestaltet ist, daß zwischen dem Dichtungsmittel (7) und der Umfangswand der Ausnehmung (9) ein Umfangsringspalt (10) gebildet wird.

8. Sitzreinigungsfähiges Doppelsitzventil nach Anspruch 7, **dadurch gekennzeichnet, daß** der Umfangsringspalt (10) über einen zwischen der Ventilstange (4c;5a) und einer diese umgebenden Hohlstange (5a;4c) gebildeten Ringspalt oder über eine Verbindungsbohrung innerhalb der innenliegenden Ventilstange (4c;5a) mit der Umgebung des Doppelsitzventils verbunden ist.

9. Sitzreinigungsfähiges Doppelsitzventil nach Anspruch 7 oder 8, **dadurch gekennzeichnet, daß** das ventilgehäuseseitige Dichtungsmittel (6) des Schieberkolbens (4) ein die Ausnehmung (9) umgebendes Ende des zweiten Schließgliedes (5) radial, radial/axial oder axial dichtend kontaktiert.

10. Sitzreinigungsfähiges Doppelsitzventil nach einem der Ansprüche 1 bis 9, **dadurch gekennzeichnet, daß** der Schieberkolben (4) zwischen dem ventilgehäuseseitigen Dichtungsmittel (6) und den Durchlaßöffnungen (4b) einen zylindrischen Ansatz (4d) aufweist, der außenseits mit der zylindrischen Ventilsitzfläche (3a) einen Drosselringspalt bildet.

11. Sitzreinigungsfähiges Doppelsitzventil nach einem der Ansprüche 1 bis 10, **dadurch gekennzeichnet, daß** das zweite Schließglied (5) an seinem die Ausnehmung (9) umgebenden Ende einen zylindrischen Ansatz (5d) aufweist, der außenseits mit einer zweiten Ventilsitzfläche (3b) einen Drosselringspalt bildet.

12. Sitzreinigungsfähiges Doppelsitzventil nach einem der Ansprüche 1 bis 11, **dadurch gekennzeichnet, daß** ein das leckagehohlraumseitige Dichtungsmittel (7) aufnehmender Teil des Schieberkolbens (4) relativ beweglich zum restlichen Schieberkolben (4) ausgebildet ist und sich einerseits gegen letzteren und andererseits gegen das zweite Schließglied (5) unmittelbar oder mittelbar unter einer Vorspannung federnd abstützt.

13. Sitzreinigungsfähiges Doppelsitzventil nach Anspruch 12, **dadurch gekennzeichnet, daß** der das leckagehohlraumseitige Dichtungsmittel (7) aufnehmende Teil des Schieberkolbens (4) mit dem Antrieb (12) des Doppelsitzventils verbunden und von dort steuerbar ist.

14. Sitzreinigungsfähiges Doppelsitzventil nach einem der Ansprüche 1 bis 13, **dadurch gekennzeichnet, daß** die Dichtungsmittel (6,7) als diskrete Dichtungen ausgeführt sind.

15. Sitzreinigungsfähiges Doppelsitzventil nach einem der Ansprüche 1 bis 13, **dadurch gekennzeichnet, daß** die Dichtungsmittel (6,7) durch Beschichtung oder Ummantelung des in Frage kommenden Endabschnittes des Schieberkolbens (4) mit einem geeigneten Dichtungsmaterial realisiert werden.

16. Sitzreinigungsfähiges Doppelsitzventil nach einem der Ansprüche 1 bis 13, **dadurch gekennzeichnet, daß** wenigstens der in Frage kommende Endabschnitt des Schieberkolbens (4) insgesamt aus einem geeigneten Dichtungsmateriai ausgeführt ist.

## Claims

1. A double seat valve with cleanable seats with two closure members mounted in series and movable relative to each other which prevent overflow of fluids from one valve housing element to another, which delimit in both the closed and the open positions a leakage cavity between them which is connected to the vicinity of the valve by way of a tubular shaft connected to one of the closure members, a first closure member in the form of a slide valve piston with an end section provided with a radial sealing agent being received so as to effect sealing in a cylindrical valve seat surface of a connecting hole joining the valve housing elements and being received during its opening movement so as to effect sealing in a recess provided in a second closure member in alignment with the cylindrical valve seat surface before the second closure member is also transferred to the open position by the first closure member, and with closure members each of which may be transferred to a seat cleaning position for the purpose of rinsing of its seat surfaces independently of each other by a partial valve stroke the width of a gap, ***characterized in that***
· the end section of the slide valve piston (4) has two radial sealing agents (6 and 7) spaced axially relative to its longitudinal axis,
· between the radial sealing agents there are provided in the slide valve piston (4) passage openings (4b) which connect the vicinity of the slide valve piston (4) on the jacket surface side to the leakage cavity (11),
· ***in that*** the two sealing agents (6, 7)
· are received into the cylindrical valve seat surface (3a) so as to effect sealing when the double seat valve is in the closed position and
· are moved to the recess (9) in the open position,
· and ***in* that**, when the slide valve piston (4) is in the seat cleaning position it is moved by the amount of a partial valve stroke in the direction of its opening movement in such a way that the passage openings (4b) are connected to the valve housing element (2; 1) adjacent to the cleared seat surfaces and in the process the sealing agent (7) of the slide valve piston (4) on the leakage cavity side remains in the cylindrical seat surface (3a) so as to effect sealing.

2. A double seat valve with cleanable seats as described in Claim 1, *wherein* there is mounted on one side of the slide valve piston (4) the tubular shaft (4e). which extends through the valve housing element (2) adjacent to the latter and receives a discharge outlet (4a) which extends through the slide valve piston (4) into the leakage cavity (11) and connects the latter to the vicinity of the double seat valve, and *wherein* there engages the slide valve piston (4) on the other side a valve rod (4c) which extends through the valve housing element (1) adjacent to this side and is connected to a drive unit (12) of the double seat valve.

3. A double seat valve with cleanable seats as described in Claim 1, *wherein* there is mounted on one side of the second closure member (5) the tubular shaft (5c) which extends through the valve housing element (2) adjacent to the latter into the vicinity of the double seat valve and receives a discharge outlet (5b) which extends through the second closure member (5) into the recess (9) which forms part of the leakage cavity (11) and connects the latter to the vicinity of the double seat valve, and *wherein* there engages the other side of the second closure member (5) a valve rod (5a) which extends through valve housing element (1) adjacent to this side and is connected to a drive unit (12) of the double seat valve.

4. A double seat valve with cleanable seats as described in Claim 3, wherein the cylindrical valve seat surface (3a) is provided internally in a seat ring (13) detachable from the valve housing elements (1, 2) and is received externally in a connecting hole (3a*) joining the valve housing elements (1, 2) and there effects sealing by means of a first and a second seat ring seal (14, 15) which is mounted in the valve housing element (1) on the drive unit side and whose smallest external diameter is larger than the largest external diameter of the second closure member.

5. A double seat valve with cleanable seats as described in one of Claims 1 to 4, *wherein* the passage openings (4b) in the aggregate have a passage cross-section corresponding to the rated cross-section of the largest pipe connected to the valve.

6. A double seat valve with cleanable seats as described in one of Claims 1 to 5, *wherein* the discharge outlet (4a; 5b) has over its total length at least one passage cross-section corresponding to the rated cross-section of the largest pipe connected to the valve.

7. A double seat valve with cleanable seats as described in one of Claims 1 to 6, wherein the radial extent of a circumferential wall of the recess (9) is configured in its area including the sealing agent (7) on the leakage cavity side when the double seat valve is in the open position so that an annular circumferential gap (10) is formed between the sealing agent (7) and the circumferential wall of the recess (9).

8. A double seat valve with cleanable seats as described in Claim 3, *wherein* the annular circumferential gap (10) is connected to the vicinity of the double seat valve by way of an annular gap between the valve rod (4c; 5a) and a hollow rod (5a; 4c) enclosing this valve rod or by way of a connecting hole inside the internal valve rod (4c; 5a).

9. A double seat valve with cleanable seats as described in one of Claims 7 or 8, *wherein* the sealing agent (6) of the slide valve piston (4) on the valve housing side is in radial, radial/axial, or axial contact with an end of the second closure member (5) enclosing the recess (9) so as to effect sealing.

10. A double seat valve with cleanable seats as described in one of Claims 1 to 9, *wherein* the slide valve piston (4) has between the sealing agent (6) on the valve housing side and the passage openings (4b) a cylindrical extension (4d) which externally forms an annular gap with the cylindrical valve seat surface (3a).

11. A double seat valve with cleanable seats as described in one of Claims 1 to 10, *wherein* the second closure member (5) has on its end enclosing the recess (9) a cylindrical extension (5d) which externally forms an annular gap with a second valve seat surface (3b).

12. A double seat valve with cleanable seats as described in one of Claims 1 to 11, *wherein* a part of the slide valve piston (4) receiving the sealing agent (7) on the leakage cavity side is designed to be movable relative to the rest of the slide valve piston (4) and on one side rests against the latter and on the other is forced against the second closure member (5) directly or indirectly by spring tension.

13. A double seat valve with cleanable seats as described in Claim 12, wherein the part of the slide valve piston (4) receiving the sealing agent (7) on the leakage cavity side is connected to the drive unit (12) of the double seat valve and may be controlled from this point.

14. A double seat valve with cleanable seats as described in one of Claims 1 to 13, *wherein* the sealing agents (6, 7) are configured as separate seals.

15. A double seat valve with cleanable seats as described in one of Claims 1 to 13, *wherein* the sealing agents (6, 7) are produced by coating or jacketing the end section involved of the slide valve piston (4) with a suitable sealing material.

16. A double seat valve with cleanable seats as described in one of Claims 1 to 13, *wherein* at least the end section of the slide valve piston (4) involved consists in its entirety of a suitable sealing material.

## Revendications

1. Soupape à double siège nettoyable avec deux éléments d fermeture (4,5) disposés en série, mobile l'un par rapport à l'autre qui, en position de fermeture de la soupape empêchent le débordement de fluides depuis une partie du boîtier de la soupape (1,2) dans une autre (2 ou 1), qui délimitent entre elles, aussi bien en position de fermeture qu'en position d'ouverture une cavité de coulage (11), qui présente une liaison avec l'entourage de la soupape via une tige tubulaire (4e; 5c) reliée à un des éléments de fermeture (4,5), un premier élément de fermeture (4) réalisé sous forme de piston tiroir étant reçu de façon étanche avec une extrémité munie de moyens d'étanchéité (6,7) en position de fermeture de la soupape, dans un siège cylindrique de la soupape (3a) d'un perçage de raccordement (3 ;3a*) raccordant les parties du boîtier de la soupape (1,2) et qui, au cours de son mouvement d'ouverture est reçu de façon étanche dans une entaille (9) affleurant le siège de la soupape (3a) prévu à l'intérieur du deuxième élément de fermeture (5), avant que le deuxième élément de fermeture (5) ne soit également passé en position d'ouverture par le premier élément (4), et avec des éléments de fermeture (4,5) qui peuvent être passés dans une position de nettoyage de siège pour le rinçage de leurs sièges (3a,3b) par un levage partiel de respectivement la largeur d'une fente, **caractérisé en ce que**
- l'extrémité du piston tiroir (4) présente deux moyens d'étanchéité (6 et 7) radiaux, distancés de façon axiale par rapport à son axe longitudinal,
- entre ceux-ci, des ouvertures de passage (4b) sont prévues dans le piston tiroir (4) qui relient l'entourage du côté de l'enveloppe du piston tiroir (4) avec la cavité de coulage (11),
- que les deux moyens d'étanchéité
- sont reçus de façon étanche en position de fermeture de la soupape à double siège, dans le siège cylindrique de la soupape (3a) et
- sont emmenés dans l'entaille (9) en position d'ouverture,
- et qu'en position de nettoyage des sièges du piston tiroir (4), celui-ci est déplacé par un levage partiel contre son mouvement d'ouverture de telle façon que les ouvertures de passage (4b) soient reliées à la partie du boîtier de la soupape (2 ; 1) adjacente au siège libéré, le moyen d'étanchéité (7) du côté de la cavité de coulage du piston tiroir (4) dans le siège cylindrique de la soupape (3a) restant étanche.

2. Soupape à double siège nettoyable selon la revendication 1, **caractérisé en ce que** sur un côté du piston tiroir (4) est disposée la tige tubulaire (4e), qui est passée à travers la partie du boîtier de la soupape (2) avoisinant cette dernière dans l'entourage de la soupape à double siège et reçoit une sortie d'écoulement (4a) qui entre à travers le piston tiroir (4) jusqu'à la cavité de coulage (11) et relie cette dernière à l'entourage de la soupape à double siège, et que de l'autre côté du piston tiroir (4) une barre de soupape (4c) s'applique, qui est passée à travers la partie du boîtier de la soupape (1) avoisinant ce côté et est reliée à une commande (12) de la soupape à double siège.

3. Soupape à double siège nettoyable selon la revendication 1, **caractérisé en ce que** sur un côté du deuxième élément de fermeture, est disposée la tige tubulaire (5c) qui est passée à travers la partie du boîtier de la soupape (2) avoisinant cette dernière dans l'entourage de la soupape à double siège et reçoit une sortie d'écoulement (5b) qui entre jusqu'à l'entaille (9) formant une partie de la cavité de coulage (11) et relie cette dernière à l'entourage de la soupape à double siège, et que de l'autre côté du deuxième élément de fermeture (5) une barre de soupape (Sa) s'applique qui est passée à travers la partie du boîtier de la soupape (1) avoisinant ce côté et est reliée à une commande (12) de la soupape à double siège.

4. Soupape à double siège nettoyable selon la revendication 3, **caractérisé en ce que** le siège cylindrique de soupape (3a) est prévu sur la face intérieure d'une bague de siège (13) amovible des parties du boîtier de la soupape (1,2) qui est reçue de façon étanche extérieurement dans un perçage de liaison (3a*) reliant des parties du boîtier de la soupape (1,2) et là, au moyen d'une première et d'une deuxième garniture de bague de siège (14,15), et qui s'appuie dans la partie du boîtier de la soupape (1) du côté de la commande et dont le plus petit diamètre extérieur est plus grand que le plus grand diamètre extérieur du deuxième élément de fermeture.

5. Soupape à double siège nettoyable selon l'une quelconque des revendications 1 à 4, **caractérisé en ce que** les ouvertures d'écoulement (4b) présentent toutes une section d'écoulement correspondant au moins à la section nominale du plus grand tuyau raccordé à la soupape.

6. Soupape à double siège nettoyable selon l'une quelconque des revendications 1 à 5, **caractérisé en ce que** la sortie d'écoulement (4a; 5b) présente sur toute sa longueur une section d'écoulement correspondant au moins à la section nominale du plus grand tuyau raccordé à la soupape.

7. Soupape à double siège nettoyable selon l'une quelconque des revendications 1 à 6, **caractérisé en ce qu'**une paroi périphérique de l'entaille (9) est réalisée de telle façon dans sa zone comprenant le moyen d'étanchéité (7) du côté de la cavité de coulage en position d'ouverture de la soupape à double siège, qu'une fente annulaire périphérique (10) soit créée entre le moyen d'étanchéité (7) et la paroi périphérique de l'entaille (9).

8. Soupape à double siège nettoyable selon la revendication 7, **caractérisé** en ce la fente annulaire périphérique (10) est reliée à l'entourage de la soupape à double siège via une fente annulaire formée entre la barre de soupape (4c; Sa) et une barre creuse (Sa ;4c) entourant cette dernière ou via un perçage de liaison à l'intérieur de la barre de soupape (4c ; Sa) intérieure.

9. Soupape à double siège nettoyable selon la revendication 7 ou 8, **caractérisé en ce que** le moyen d'étanchéité (6) situé du côté du boîtier de la soupape du piston tiroir (4) est en contact radialement, radialement/axialement ou axialement étanche avec une extrémité du deuxième élément de fermeture (5) entourant l'entaille (9).

10. Soupape à double siège nettoyable selon l'une quelconque des revendications 1 à 9, **caractérisé en ce que** le piston tiroir (4) présente une saillie cylindrique (4d) entre le moyen d'étanchéité (6) du côté du boîtier de la soupape et les ouvertures d'écoulement (4b), qui forme extérieurement une fente de bague d'étranglement avec le siège cylindrique de la soupape (3a).

11. Soupape à double siège nettoyable selon l'une quelconque des revendications 1 à 10, **caractérisé en ce que** le deuxième élément de fermeture (5) présente une saillie cylindrique (5d) à son extrémité entourant l'entaille (9) qui forme extérieurement une fente de bague d'étranglement avec un deuxième siège de la soupape (3b).

12. Soupape à double siège nettoyable selon l'une quelconque des revendications 1 à 11, **caractérisé en ce qu'**une partie du piston tiroir (4) recevant le moyen d'étanchéité '7)du côté de la cavité de coulage est réalisée de façon relativement mobile par rapport au reste du piston tiroir (4) et s'appuie d'un côté contre ce dernier et de l'autre côté contre le deuxième élément de fermeture (5), de façon directe ou indirecte sous une précontrainte élastique.

13. Soupape à double siège nettoyable selon la revendication 12, **caractérisé en ce que** la partie du piston tiroir (4) recevant le moyen d'étanchéité (7) du côté de la cavité de coulage est reliée à la commande (12) de la soupape à double siège et peut être commandée depuis cet endroit.

14. Soupape à double siège nettoyable selon l'une quelconque des revendications 1 à 13, **caractérisé en ce que** les moyens d'étanchéité (6,7) sont réalisés sous forme de garnitures discrètes.

15. Soupape à double siège nettoyable selon l'une quelconque des revendications 1 à 13, **caractérisé en ce que** les moyens d'étanchéité (6,7) sont réalisés en enduisant ou enveloppant l'extrémité du piston tiroir (4) en question avec un matériau d'étanchéité approprié.

16. Soupape à double siège nettoyable selon l'une quelconque des revendications 1 à 13, **caractérisé en ce qu'**au moins l'extrémité de piston tiroir (4) en question est entièrement réalisée en un matériau d'étanchéité approprié.
